# EUROPÄISCHE PATENTSCHRIFT

(11) **EP 4 155 014 B1**
(45) Veröffentlichungstag und Bekanntmachung des Hinweises auf die Patenterteilung: **04.11.2026**
(21) Anmeldenummer: 22196303.6
(22) Anmeldetag: 19.09.2022
(51) Int. Cl.: B23B 31/00, B23Q 11/10, B24B 45/00, B24B 55/02

(54) **SCHLEIFSCHEIBENAUFNAHME**
GRINDING WHEEL MOUNTING
LOGEMENT DE MEULE

(30) Priorität: 24.09.2021 DE 102021124802
(43) Veröffentlichungstag der Anmeldung: 29.03.2023
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Schwarz, Wolfgang

(56) Entgegenhaltungen:
- CN-U- 201 516 576
- DE-T1- 19 983 838
- DE-U1- 202017 000 560
- DE-U1- 29 980 181

## Beschreibung

Die Erfindung betrifft eine Schleifscheibenaufnahme.

Es ist bekannt, dass Schleifen zu den spanenden Fertigungsverfahren zählt und in der Regel im Bereich der Fein- und Endbearbeitung von Werkstücken angewandt wird.

Da mit klassischen, schleifenden Verfahren seit jeher nur ein vergleichsweise geringer Materialabtrag (z. B. im Vergleich zum Fräsen) zu erzielen war, ist die Entwicklung in Richtung des sogenannten Hochleistungsschleifens bei Werkzeugmaschinen vorangetrieben worden. Hierdurch kann teilweise der 100-fache bis 1000-fache Materialabtrag im Vergleich zu dem klassischen Schleifverfahren generiert werden (vgl. DE 20 2017 000 560 U1).

Für den Schleifprozess werden Werkzeugmaschinen eingesetzt, welche mit in Schleifscheibenaufnahmen gehaltenen bzw. aufgenommenen Schleifwerkzeugen, kurz auch nur Schleifscheiben, bestückt sind. Wurden früher dafür spezielle Schleifmaschinen verwendet, so wird der Schleifprozess heute vermehrt auf Fräsmaschinen durchgeführt, insbesondere wenn große und schwere Werkstücke bearbeitet werden sollen. Dadurch lassen sich auch tief liegende und schlecht zugängliche Flächen in einer Aufspannung bearbeiten. Voraussetzung dafür sind lang auskragende Schleifscheibenaufnahmen mit hoher Steifigkeit.

Eine solche Schleifscheibenaufnahme mit aufgenommener Schleifscheibe ist beispielsweise aus der DE 20 2017 000 560 U1 bekannt.

Des Weiteren offenbart die DE 199 83 838 T1 den Oberbegriff des Anspruchs 1, nämlich eine Schleifscheibenaufnahme mit einem rotationssymmetrischen, hohlzylinderförmigen Aufnahmegrundkörper und einem im Hohlraum des Aufnahmegrundkörpers beabstandet vom Zylindermantel des Aufnahmegrundkörpers angeordnetes Durchgangsrohr.

Eine solche Schleifscheibenaufnahme umfasst dabei im Wesentlichen einen rotationssymmetrischen zylindrischen Aufnahmegrundkörper, einerends diesem eine Schleifscheibenauflage und mindestens einen Spannflansch, mittels diesem das Schleifwerkzeug bzw. die Schleifscheibe zwischen Schleifscheibenauflage und Spannflansch verspannt wird.

Andererends des Aufnahmegrundkörpers weist dieser eine Schnittstelle auf, die die Verbindung zwischen der Schleifscheibenaufnahme und einer Arbeits-/Schleifspindel einer Werkzeugmaschine herstellt.

Über einen inneren Kanal im sonstig einstückig ausgebildeten Aufnahmegrundkörper kann Kühlmittel - von der arbeitsspindelseitigen Schnittstelle zu der Schleifscheibenauflage - geleitet werden.

Weiter sieht die Schleifscheibenaufnahme aus der DE 20 2017 000 560 U1 ein im Inneren des Aufnahmegrundkörpers angeordnetes Dämpfungselement vor, welches durch das schleifende Bearbeiten des Werkstücks hervorgerufene Schwingungen dämpfen soll.

Bei schnell rotierenden Bauteilen, wie dies insbesondere im Falle von Werkzeugmaschinen beim Hochleistungsschleifen vorliegt, können, wie die DE 20 2017 000 560 beschreibt, nämlich mögliche Unwuchten im Werkzeugsystem zu immensen Schwingungen im Werkzeugsystem bzw. am Schleifwerkzeug führen, was - wird nun mit einem derart schwingenden Schleifwerkzeug versucht, Material vom Werkstück abzutragen, - unweigerlich zu einem ungenügenden Schleifergebnis führt. Im schlimmsten Fall kann dies auch zur Beschädigung bzw. Zerstörung des Werkzeugsystems führen.

Die DE 20 2017 000 560 U1 stellt auch fest, dass Schwingungen eines Ausmaßes, wie sie im Bereich eines Hochleistungsschleifens auftreten können, auch durch ein solchermaßen wie bei ihr vorgesehenes Dämpfungselement nicht ausreichend abgemildert werden können.

Es ist Aufgabe der Erfindung, die im Stand der Technik bekannten Schleifscheibenaufnahmen zu verbessern, insbesondere auch eine Schleifscheibenaufnahme zu schaffen, welche ein gutes Dämpfungsverhalten zeigt.

Diese Aufgabe wird gelöst durch eine Schleifscheibenaufnahme - mit den Merkmalen des unabhängigen Anspruchs.

Vorteilhafte Weiterbildungen der Erfindung sind Gegenstand abhängiger Ansprüche sowie der nachfolgenden Beschreibung.

Gegebenenfalls verwendete Begriffe, wie oben, unten, vorne, hinten, links oder rechts sowie innen oder außen sind - soweit nicht anders explizit definiert - nach üblichem Verständnis zu verstehen. Begriffe, wie radial und axial, sind, soweit verwendet und nicht anders explizit definiert, in Bezug auf Mittel- bzw. Symmetrie- oder Drehachse der hier beschriebenen Schleifscheibenaufnahme oder deren Bauteile/Komponenten zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Die Schleifscheibenaufnahme weist einen rotationssymmetrischen, hohlzylinderförmigen Aufnahmegrundkörper auf.

Im Hohlraum des Aufnahmegrundkörpers ist - beabstandet vom Zylindermantel des (hohlzylinderförmigen) Aufnahmegrundkörpers - ein Durchgangsrohr gegen den Aufnahmegrundkörper verspannt angeordnet.

Insbesondere ist das Durchgangsrohr rotationssymmetrisch und/oder koaxial zum Aufnahmekörper (bzw. dessen Mittel-/Symmetrie-/Drehachse) in diesem angeordnet.

Insbesondere ist es auch zweckmäßig, wenn das Durchgangsrohr ein Kühlmittelrohr, insbesondere ein gegen den Hohlraum abgedichtetes Kühlmittelrohr, ist. Als Teil eines Kühlmittelversorgungsystems kann so das Durchgangsrohr bzw. Kühlmittelrohr Kühlmittel von einerends des Aufnahmegrundkörpers (Schnittstelle Arbeits-/Schleifspindel), durch diesen bis andererends des Aufnahmegrundkörpers (Schleifscheibenauflage/Schleifscheibe) leiten

Die erfindungsgemäße Schleifscheibenaufnahme vereint - durch ihren vorgesehenen Aufbau - mehrere vorteilhafte Wirkungen. So bewirkt ihr modularer Aufbau mehrerer zusammenfügbarer bzw. -gefügter Bauteile, wie der Aufnahmegrundkörper und das im Hohlraum des Aufnahmegrundkörpers angeordnete Durchgangsrohr, und dadurch auftretende Fügestellen eine dämpfende Wirkung, was als Fügestellendämpfung bekannt ist, wird nämlich an Fügestellen bzw. an den Schnittstellen zwischen Bauteilen Energie dissipiert.

Der bei der Schleifscheibenaufnahme ferner vorgesehene - innen hohle - hohlzylinderförmige Aufnahmegrundkörper ermöglicht eine spürbare Gewichtsreduktion (ca. 40%) bei der Schleifscheibenaufnahme (in Vergleich zu herkömmlichen Schleifscheibenaufnahmen).

Die bei der Schleifscheibenaufnahme darüber hinaus Verspannung des (inneren) Durchgangsrohrs gegen den Aufnahmegrundkörper führt zu einer erhöhten Steifigkeit des Systems.

Kurz, die erfindungsgemäße Schleifscheibenaufnahme zeichnet sich durch hohe Steifigkeit, geringes Gewicht und hohe dämpfende Wirkung aus.

Nach einer Weiterbildung ist vorgesehen, dass einerends des Durchgangsrohrs ein Gewinde vorgesehen ist. Andererends kann beispielsweise eine - die Verspannung mit dem Aufnahmegrundkörper bewirkende - Spannschulter angeordnet vorgesehen sein. Insbesondere zweckmäßig ist es, wenn die Spannschulter einen Konus (mit vorgebbaren Konuswinkel) aufweist (, welches sich gegen eine Spannschulter mit einem komplementären Konus abstützt).

Kann so das Durchgangsrohr - ähnlich einer Langschraube - verschraubt - und so ihre axiale Position ver-/eingestellt werden, so kann dadurch die Verspannung des Durchgangsrohrs (stufenlos) eingestellt werden.

Ein solches Gewinde kann beispielsweise ein am Durchgangsrohr vorgesehenes Außengewinde (oder dort vorgesehenes Innengewinde) sein. Ein komplementäres Gewinde für die Verschraubung mit dem Durchgangsrohr kann am Aufnahmegrundkörper selbst - oder an einem im Aufnahmegrundkörper angeordneten Bauteil, wie einem Halter bzw. Durchgangsrohrhalter oder einem Einsatz(-bauteil), angeordnet sein.

Auch eine Abdichtung kann an der Verschraubungsstelle (oder in deren Nähe) vorgesehen sein, welche die Schnittstelle zwischen Durchgangsrohr und Aufnahmegrundkörper bzw. Bauteil/Durchgangsrohrhalter abdichtet. Aufgabe einer solchen Dichtung (, wie auch im Folgenden beschriebener ähnlichen Dichtungen an und um das Durchgangsrohr) ist, einen Eintritt von Kühlmittel - aus dem Durchgangsohr - als Kühlmittelrohr - in den Hohlraum des Aufnahmegrundkörpers zu verhindern.

Dieses - mit dem Durchgangsrohr zu verschraubende und an dem Aufnahmegrundkörper angeordnete - Bauteil bzw. der Durchgangsrohrhalter kann beispielsweise mit dem Aufnahmegrundkörper (unter Verwendung von Stiften) insbesondere drehfest verbunden, beispielsweise verstiftet, sein. Auch hier kann eine Dichtung (s. oben) zwischen den Bauteilen vorgesehen sein.

Nach einer Weiterbildung ist weiter beispielsweise auch vorgesehen, dass mit dem Durchgangsrohrhalter ein Kühlmittelzuführrohr verbunden, insbesondere verschraubt, ist, welcher der Zuführung von Kühlmittel dient. Eine Abdichtung (s. oben) zwischen den Bauteilen kann auch vorgesehen und zweckmäßig sein.

Auch kann weiterbildend vorgesehen sein, dass zwischen dem Durchgangsrohr und dem Durchgangsrohrhalter eine Hülse angeordnet, insbesondere abgedichtet (s. oben) angeordnet, ist.

Dabei kann es zweckmäßig sein, wenn die Hülse axial in eine Aufnahmebohrung in dem Durchgangsrohrhalter (nur frei) eingeschoben ist, da so - bei einer axialen Einstellung des Durchgangsrohrs (vgl. Einstellung der Verspannung, beispielsweise über die Verschraubung) eine freie axiale Verschiebung der Bauteile gewährleistet ist.

Die (erwähnte) andererends des Durchgangsrohrs vorgesehene, insbesondere konusförmig ausgebildete, Spannschulter ist - nach einer Weiterbildung - zur Verspannung mit dem Aufnahmegrundkörper oder mit einem mit dem Aufnahmegrundkörper verbundenen, sich dort (kraftschlüssig) abstützenden anderen Bauteil, wie einer Schleifscheibenauflage, vorgesehen.

D.h., das Durchgangsrohr stützt sich an den Aufnahmegrundkörper (selbst) oder an dem mit dem Aufnahmegrundkörper verbundenen anderen Bauteil bzw. der Schleifscheibenauflage, beispielsweise dieses bzw. diese verschraubt oder verstiftet mit dem Aufnahmegrundkörper, ab -, wodurch so die Verspannung des Durchgangsrohrs gegen den Aufnahmegrundkörper (direkt/unmittelbar oder indirekt) bewirkt werden kann.

Schnittstellen/Kontaktflächen zwischen den Bauteilen können abgedichtet sein.

Auch kann vorgesehen sein, dass das andere Bauteil bzw. die Schleifscheibenauflage, welche beispielsweise verschraubt mit dem Aufnahmegrundkörper sein kann, auch einstückig mit dem Aufnahmegrundkörper ausgeführt ist. Darüber hinaus kann auch vorgesehen sein, die Schleifscheibenauflage mehrteilig auszubilden.

Zweckmäßig ist es, wenn die Schleifscheibenauflage mindestens eine in den Hohlraum (des holzylinderförmigen Aufnahmegrundkörpers) mündende, insbesondere mittels einer Verschlussschraube verschließbare, Einfüllbohrung aufweist. Über eine solche Einfüllbohrung können (später noch beschriebene) Dämpf- bzw. Dämpfungsmaterialien bzw. Dämpfstoffe, wie Schäume, beispielsweise Aluschäume, Elastomere u.Ä., in den Hohlraum eingefüllt werden.

Die Verspannung des Durchgangsrohrs (gegen den Aufnahmekörper) über die Spannschulter am Durchgangsrohr lässt sich zweckmäßig über einen entsprechenden Konus (mit vorgebbaren Konuswinkel) am Durchgangsrohr - beispielsweise an einem Außenumfang des Durchgangsrohrs als Außenkonus - realisieren. Konuswinkel können in weiten Bereichen variieren, beispielsweise können sehr steile Konusse mit Konuswinkel von ca. 40° bis 60°, oder auch sehr flache Konusse mit Konuswinkel von ca. 5° bis 20° realisiert werden.

Eine komplementäre Gegenschulter/Gegenkonus - am Aufnahmegrundkörper oder an dem anderen Teil bzw. der Schleifscheibenauflage - ist entsprechend zweckmäßig dann vorzusehen.

Zweckmäßig ist es auch, wenn ein mit der Schleifscheibenauflage verschraubbarer Spannflansch für die Schleifscheibe vorgesehen ist. Zwischen Schleifscheibenauflage und Spannflansch angeordnet - kann so die Schleifscheibe verspannt (gehalten) werden.

Zweckmäßigerweise kann in der Schleifscheibenauflage eine sich axial durch die Schleifscheibenauflage hindurch erstreckende Kühlmittelbohrung vorgesehen sein, mittels welcher Kühlmittel (axial) durch die Schleifscheibenauflage hindurch geleitet werden kann.

Ferner kann auch in dem Spannflansch eine sich axial durch den Spannflansch hindurch erstreckende, insbesondere mittels einer Verschlussschraube verschließbare, Kühlmittelbohrung vorgesehen sein.

Auch kann vorgesehen sein, dass radiale Kühlmitteldurchgangsbohrungen in dem Spanflansch vorgesehen sind, welche sich insbesondere von der axialen Kühlmittelbohrung in dem Spannflansch bis an dessen Außenumfang(-fläche) erstrecken. So kann Kühlmittel - durch den Spannflansch hindurch - bis an die Schleifscheibe geleitet werden.

Weist die Schleifscheibe selbst darüber hinaus Poren auf, so kann auch diese auf diese Weise gut gekühlt werden.

Darüber hinaus kann auch eine an einer Schnittstelle zwischen dem Durchgangsrohr und dem Spannflansch zwischen dem Durchgangsrohr und dem Spannflansch angeordnete, insbesondere abgedichtete (s. oben), Hülse vorgesehen sein, welche eine - dichte - Durchleitung von Kühlmittel von Durchgangsrohr zu Spannflansch bzw. über dortiger Schnittstelle zur Verfügung stellen kann.

Ferner ist es zweckmäßig -, um Unwuchten das Systems ausgleichen zu können, - wenn Bohrungen für Wuchtschrauben an einer Außenumfangsfläche des Aufnahmegrundkörpers und/oder der Schleifscheibenauflage angeordnet sind. Auch an anderen Stellen an der Schleifscheibenaufnahme können solche Bohrungen (für Wuchtschrauben) vorgesehen sein.

Die Dämpfung der Schleifscheibenaufnahme kann weiter dadurch erhöht werden, wenn mindestens ein Dämpfungskörper bzw. eine Schwingungsmasse bei der Schleifscheibenaufnahme vorgesehen ist, insbesondere mehrere oder eine Vielzahl von Dämpfungskörper bzw. Schwingungsmassen.

Prinzipiell können solche Dämpfungskörper nach Form und/oder Material und/oder Ort bei der Schleifscheibenaufnahme beliebig bzw. in weiten Bereichen variabel sein.

Ist erfindungsgemäß der Aufnahmegrundkörper als hohlzylindrisches Rohr vorgesehen, so ist es insbesondere und bevorzugt zweckmäßig, wenn im Hohlraum des Aufnahmegrundkörpers mindestens ein Dämpfungskörper angeordnet ist. (Alternativ mag auch eine Außenseite am Aufnahmegrundkörper möglich sein.)

Hier kann es zweckmäßig sein, wenn der mindestens eine Dämpfungskörper eine Ringscheibe oder eine Hülse, insbesondere eine in den Hohlraum eingeschobene, dort gehaltene, eingepresste und/oder verspannte Ringscheibe oder Hülse, insbesondere eine Ringscheibe oder Hülse aus Kunststoff, Metall (gegebenenfalls auch Schwermetall, also einem Metall, das eine wesentlich höhere Dichte aufweist als Stahl, wie z. B. Wolfram) oder Gummi, ist.

Auch kann vorgesehen sein, dass der mindestens eine Dämpfungskörper ein - im Hohlraum des Aufnahmegrundkörpers - von dem Zylindermantel (des Aufnahmegrundkörpers) und/oder vom Durchgangsrohr beabstandet gehaltener, insbesondere mittels eines Ringes, im Speziellen mittels eines Gummi- oder Kunststoffringes, beabstandet gehaltener, Dämpfungskörper, insbesondere aus einem Schwermetall oder einem Kunststoff, ist.

Insbesondere kann es auch zweckmäßig sein, wenn mehrere, insbesondere ein Vielzahl, im Hohlraum angeordnete Dämpfungskörper vorgesehen sind.

Weiterbildend kann dann auch vorgesehen sein, dass die mehreren bzw. die vielen Dämpfungskörper mittels Hülsen axial beabstandet gehaltene Ringscheiben sind, welche insbesondere mittels Ringe, im Speziellen mittels Gummi- oder Kunststoffringe, vom Zylindermantel (des Aufnahmegrundkörpers) oder vom Durchgangsrohr beabstandet gehalten werden.

Auch kann vorgesehen sein, dass die mehreren bzw. die vielen Dämpfungskörper unmittelbar aneinander anliegende Ringscheiben ("Stapel(-bildung)") sind.

Auch kann in dem Hohlraum ein (bereits erwähnter) Dämpfstoff eingebracht ist, insbesondere ein Elastomer oder ein (Alu-) Schaum.

Für die Anbindung an die Arbeits-/Schleifspindel ist es zweckmäßig, wenn die Schleifscheibenaufnahme eine Schnittstelle für eine Schleifspindel vorsieht, beispielsweise einen HSK oder Steilkegel. Jedoch können auch andere, nicht standardisierte Verbindungsmöglichkeiten/Schnittstellen Anwendung finden. Die Schnittstelle kann dabei einerends einstückig an dem Aufnahmegrundkörper oder als separates Bauteil an dem Aufnahmegrundkörper angeordnet sein. Auch die Schnittstelle selbst kann ihrerseits ein- oder mehrteilig ausgeführt sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine Schleifscheibenaufnahme gemäß einer erfindungsgemäßen Ausführung,
- FIG 1a: einen Ausschnitt der Schleifscheibenaufnahme gemäß der erfindungsgemäßen Ausführung nach FIG 1 - mit der Verschraubung der Schleifscheibenauflage mit dem Aufnahmegrundkörper,
- FIG 2: eine Schleifscheibenaufnahme gemäß einer erfindungsgemäßen Ausführung,
- FIG 3: eine Schleifscheibenaufnahme gemäß einer erfindungsgemäßen Ausführung,
- FIG 4: eine Schleifscheibenaufnahme gemäß einer erfindungsgemäßen Ausführung,
- FIG 5: eine Schleifscheibenaufnahme gemäß einer erfindungsgemäßen Ausführung,
- FIG 6: eine Schleifscheibenaufnahme gemäß einer erfindungsgemäßen Ausführung,
- FIG 7: eine Schleifscheibenaufnahme gemäß einer erfindungsgemäßen Ausführung und
- FIG 8: eine Schleifscheibenaufnahme gemäß einer erfindungsgemäßen Ausführung.

### - (modulare) Schleifscheibenaufnahme (FIGen 1 bis 8)

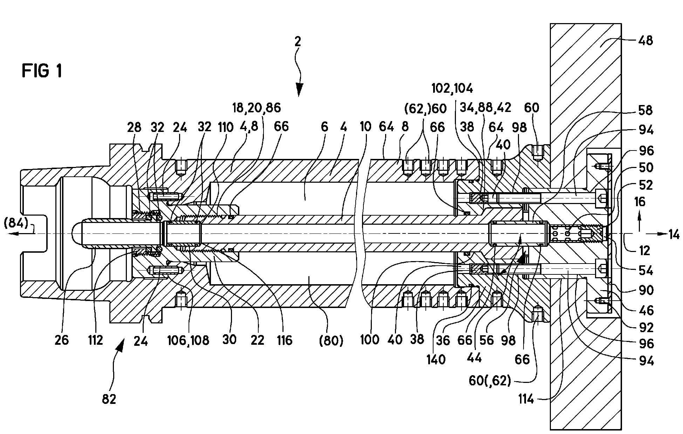

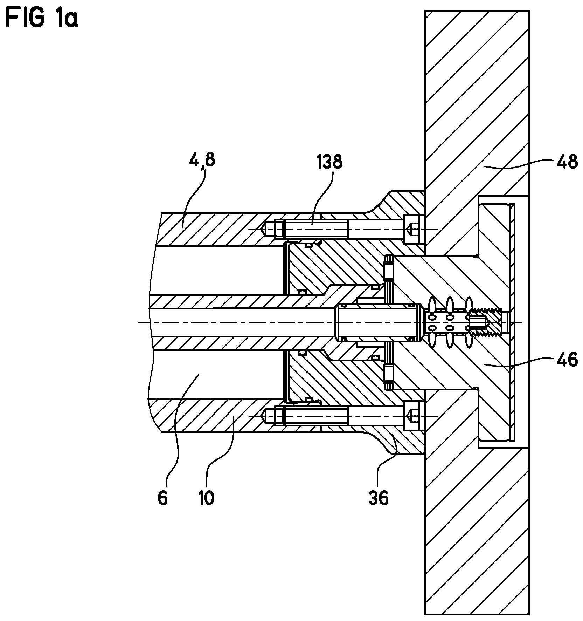

FIG 1 (mit der Ausschnittsdarstellung nach FIG 1a) zeigt eine modulare bzw. mehrteilige Schleifscheibenaufnahme 2.

Diese Schleifscheibenaufnahme 2 weist einen im Wesentlichen rotationssymmetrischen hohlzylindrischen Aufnahmegrundkörper 4 (mit Zylindermantel 8) auf.

Einerends diesem Aufnahmegrundkörper 4 ist eine Schleifscheibenauflage 36 mittels Schrauben 138 verschraubt am dem Aufnahmekörper 4 - angeordnet (vgl. FIG 1a; FIG 1a zeigt einen deckelseitigen Ausschnitt der Schleifscheibenaufnahme 2 in einem anderen (Längs-)Schnitt, welcher die Verschraubung 136 von Schleifscheibenauflage 36 und Aufnahmegrundkörper 4 zeigt). Auf dieser auf- bzw. an dieser anliegend wird, wie FIG 1 zeigt, zwischen der Schleifscheibenauflage 36 und einem Spannflansch 46 eine Schleifscheibe 48 verspannt (gehalten).

An dem Spannflansch 46 ist ein Deckel 90 angeschraubt (92), welcher eine sich zentral axial 14 durch den Spannflansch 46 hindurch erstreckende Kühlmittbohrung 54 abdeckt.

Wie FIG 1 auch zeigt, sieht der Spannflansch 46 radial 16 verlaufende Kühlmittelbohrungen 50 vor, welche sich von der zentralen axialen 14 Kühlmittelbohrung 54 radial 16 nach außen bis an die Außenseite 114 des Spannflansches 46 erstrecken.

Die sich zentral axial 14 durch den Spannflansch 46 hindurch erstreckende Kühlmittbohrung 54 ist deckelseitig mittels einer Verschlussschraube 52 verschlossen.

Die Verspannung der Schleifscheibe 48 - zwischen Spannflansch 46 und Schleifscheibenauflage 36 - erfolgt über eine Verschraubung von Spannflansch 46 und Schleifscheibenauflage 36 mittels Langschrauben 94, welche sich durch Durchgangsbohrungen 96 im Spannflansch 46 hindurch in Gewinde 98 (dort verschraubt) in Bohrungen 40, sogenannte Einfüllbohrungen 40 (s. nachfolgend zu deren Zweck), in der Schleifscheibenauflage 36 erstrecken.

Über diese Einfüllbohrungen 40, welche, wie FIG 1 auch zeigt, mittels Verschlussschrauben 38 verschließbar sind, kann in den Hohlraum 6 des (hohlzylindrischen) Aufnahmegrundkörpers ein Dämpfmaterial, wie beispielsweise ein Elastomer oder ein (Alu-)Schaum 80, eingefüllt werden (als optional angedeutet).

Wie FIG 1 auch zeigt, sind an der Außenumfangsfläche 64 von Aufnahmegrundkörper 4 und Schleifscheibenauflage 36 verschiedene Bohrungen 60, insbesondere Gewindebohrungen, für Wuchtschrauben (62, nicht gezeigt) eingebracht.

In dem hohlzylindrischen Aufnahmegrundkörper 4 ist - koaxial (bezüglich Mittel-/Symmetrie-/Drehachse 12) zum Aufnahmegrundkörper 4 - ein Durchgangsrohr 10, hier ein Kühlmittelrohr 10, angeordnet, welches deckelseitig in einer Durchgangsbohrung 100 in der Schleifscheibenauflage 36 (verspannt - dazu nachfolgend) - abgedichtet (gegen die Schleifscheibenauflage) durch einen Dichtring 66 - gehalten wird.

Wie FIG 1 zeigt, sieht das Kühlmittelrohr 10 an seinem deckelseitigen Ende eine (einen Außenkonus 42 bildende) konische - mit einen vorgebbaren Konuswinkel 44, beispielsweise ca. 50°, - Spannschulter 34 vor, welche gegen eine komplementäre Spannschulter 88 in der Durchgangsbohrung 100 der Schleifscheibenauflage 36 verspannt ist.

Diese Verspannung von Kühlmittelrohr 10 und Schleifscheibenauflage 36 bewirkt auch, dass die - mit dem Aufnahmegrundkörper 4 verschraubte (138) - Schleifscheibenauflage 36 über einen Flansch 102 an der deckelseitigen Stirnseite 104 des Aufnahmegrundkörpers 4 verspannt an- bzw. aufliegt bzw. gegen diese an die deckelseitige Stirnseite 104 des Aufnahmegrundkörpers 4 herangezogen wird - und so letztlich das Kühlmittelrohr 10 gegen den Aufnahmegrundkörper 4 verspannt ist -, was dem System eine hohe Steifigkeit verleiht.

Ein Dichtring 140 dichtet den Kontakt von Schleifscheibenaufnahme 36 und Aufnahmegrundkörper 4 ab.

Die Spannkraft(-aufbringung) für die Verspannung (von Kühlmittelrohr 10 und Schleifscheibenauflage 36 bzw. Kühlmittelrohr 10 und Aufnahmegrundkörper 4) erfolgt mittels einer Verschraubung 20 andererends des Kühlmittelrohrs 10.

Dazu sieht dort (andererends) das Kühlmittelrohr 10 ein - in ein Innengewinde 86 eines mit dem Aufnahmegrundkörper 4 drehfest verbundenen Durchgangsrohrhalters 22 (s. später) eingreifendes - Außengewinde 18 vor, über welches das Kühlmittelrohr 10 in den Durchgangsrohrhalter 22, genauer in eine Durchgangsbohrung 116 durch den Durchgangsrohrhalter 22 (dort deckelseitig), einschraubbar (Verschraubung 20) ist. Der axiale Einschraubweg bestimmt die Vorspannung (stufenlos).

Im Bereich der Verschraubung zwischen Kühlmittelrohr 10 und Durchgangsrohrhalter 22 ist auch eine Dichtung 66 (in Form eines Dichtrings 66) zwischen Kühlmittelrohr 10 und Durchgangsrohrhalter 22 vorgesehen.

Ferner ist, wie FIG 1 zeigt, in dem Kühlmittelrohr 10 - deckelseitig an der im Inneren der Schleifscheibenauflage 36 liegenden Schnittstelle 56 zwischen Kühlmittelrohr 10 und Spannflansch 22 - eine Hülse 58 in das Kühlmittelrohr 10 eingeschoben (, welche auch gegen das Kühlmittelrohr 10 abgedichtet ist (66)), deren anderes Ende in der axialen Kühlmittelbohrung 54 des Spannflansches 46 aufgenommen ist (auch hier abgedichtet 66).

Ferner ist, wie FIG 1 zeigt, in dem Kühlmittelrohr 10 - am deckelseitig abgewandten Ende - eine Hülse 30 bis an einen Anschlag 110 in das Kühlmittelrohr 10 eingeschoben (, welche auch gegen das Kühlmittelrohr 10 abgedichtet ist (32)), deren anderes Ende in die Durchgangsbohrung 116 durch den Durchgangsrohrhalter 22 eingeschoben ist, - hier aber axial frei ist, um einen maximalen axialen Verschraubungsweg zu gewährleisten. Auch hier ist eine Dichtung 32 - zwischen Hülse 30 und Durchgangsrohrhalter 22 - vorgesehen.

Wie FIG 1 auch zeigt, stützt sich der Durchgangsrohrhalter 22 über eine an ihm angeordnete Schulter 106 an einer (Gegen-)Schulter 108 im Inneren des Aufnahmegrundkörpers 4 ab. Stifte 24 verhindern ein Verdrehen des Durchgangsrohrhalters 22.

Ferner zeigt FIG 1, dass - am deckelseitig abgewandten Ende des Durchgangsrohrhalters 22 - ein Kühlmittelzuführrohr 26 - über eine Hülse 112 angeschraubt (Verschraubung 28) - mit dem Durchgangsrohrhalter (abgedichtet 32) verbunden ist.

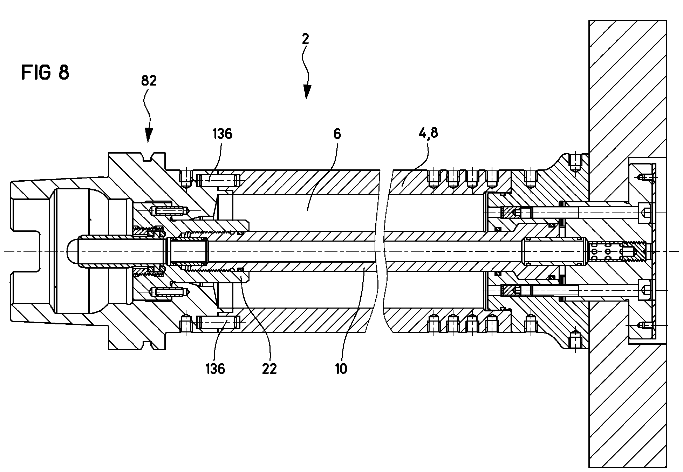

Schleifscheibenseitig andererends des Aufnahmegrundkörpers 4 ist (einstückig) an dem Aufnahmegrundkörper 4 eine Schnittstelle 82, hier ein HSK 82, angeordnet, die die Verbindung zwischen der Schleifscheibenaufnahme 4 und einer Arbeits-/Schleifspindel (84 nicht gezeigt) einer Werkzeugmaschine herstellt. (vgl. FIG 8, hier ist verdeutlicht, dass die hier mit dem Aufnahmegrundköper 4 einstückige Schnittstelle 82 auch durch ein separates - gegebenenfalls mittels Stifte 136 drehfest mit dem Aufnahmegrundkörper 4 verbundenes - Bauteil 82 ausgeführt sein kann)

Über das Kühlmittelzuführrohr 26, der Durchgangsbohrung 116 im Durchgangsrohrhalter 22, der deckelseitig abgewandten dortigen Hülse 30, dem Kühlmittelrohr 10, der deckelseitigen Hülse 58 und des die axiale Durchgangs-/Kühlmittelbohrung 54 und die radialen Kühlmittelbohrungen 50 aufweisenden Spannflansches 46 kann Kühlmittel bis an die Schleifscheibe 48 herangeführt werden. Poren (nicht verdeutlicht) in der Schleifscheibe 48 können das Kühlmittel in die Schleifscheibe 48 eindringen lassen. Beschriebene Dichtung (32, 66) in der Schleifscheibenaufnahme 4 bzw. an dortigen Bauteilen verhindern ein Eindringen des Kühlmittels in den Hohlraum 6.

Alternativ oder ergänzend hierzu kann das Kühlmittel auch durch radiale Bohrungen in der Schleifscheibenauflage 36 und/oder Spannflansch 46 von außen der Schleifscheibe 48 zugeführt werden (nicht dargestellt).

In den FIGen 2 bis 8 sind modifizierte und/oder weitergebildete Ausführungen der in FIG 1 gezeigten und im Obigen beschriebenen Schleifscheibenaufnahme 2 dargestellt.

Da diese Ausführungen von Schleifscheibenaufnahmen 2 (nach den FIGen 2 bis 8) im Wesentlichen der (beschriebenen) Schleifscheibenaufnahme 2 nach FIG 1 entsprechen, wird in den nachfolgenden Beschreibungen auf Wiederholungen von Beschreibungen identischer, gleichverwendeter Bauteilen bei den weiteren Schleifscheibenaufnahmen 2 in den FIGen 2 bis 8 verzichtet. Nur mehr die Modifikationen und Weiterbildungen (in den FIGen 2 bis 8) werden folgend dargestellt.

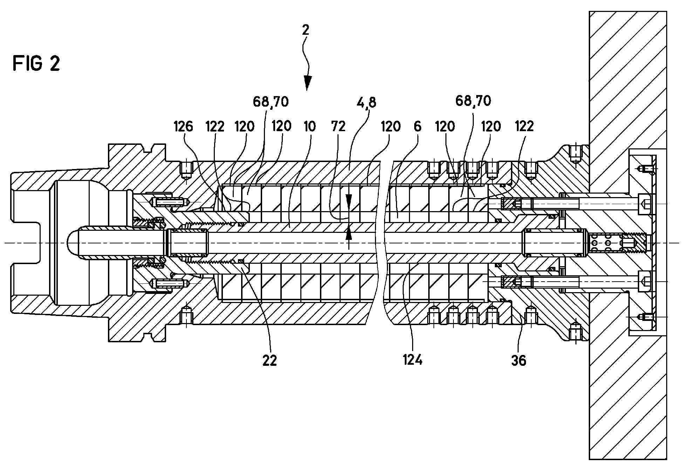

FIG 2 zeigt die Schleifscheibenaufnahme 2, wie sie durch zusätzliche Dämpfungselemente 68 in ihren Dämpfungsverhalten verbessert wird.

Wie FIG 2 zeigt, befinden sich im Inneren des Zylindermantels 8 des Aufnahmegrundkörpers 4 eine Vielzahl von (stapelartig aneinander angeordneten) Dämpfungselemente 68 - in Form von Ringscheiben 70.

Diese Ringscheiben 70 sind - über ihren Außenumfang 120 in den Zylindermantel 8 des Aufnahmegrundkörpers 4 - koaxial zu Aufnahmegrundkörper 4 und Durchgangsrohr/Kühlmittelrohr 10 - eingepresst - und erstrecken sich (im Hohlraum 6 im Aufnahmegrundkörper 4) im Wesentlichen über die gesamte axiale 14 Länge zwischen Durchgangsrohrhalter 22 und Schleifscheibenauflage 36.

Der Innenumfangsdurchmesser 122 der Ringscheiben 70 entspricht im Wesentlichen einem Außenumfangsdurchmesser 126 des Durchgangsrohrhalters 22 - und lässt so (dort, wo sie nicht auf dem Durchgangsrohrhalter 22 aufsitzen - vgl. FIG 2) einen radialen Abstand 72 zum Außenumfang 124 des Kühlmittelrohres 10.

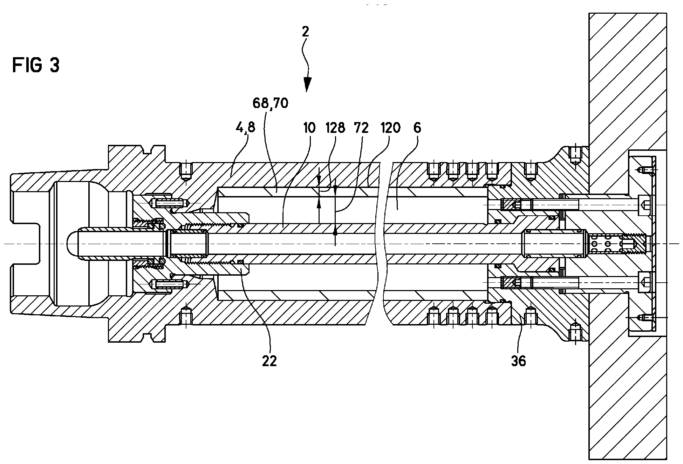

FIG 3 zeigt die Schleifscheibenaufnahme 2, wie sie durch ein anderes zusätzliches Dämpfungselement 68 in ihren Dämpfungsverhalten verbessert wird.

Wie FIG 3 zeigt, befindet sich im Inneren des Zylindermantels 8 des Aufnahmegrundkörpers 4 ein Dämpfungselement 68 - in Form einer Hülse 70.

Diese Hülse 70 ist - über ihren Außenumfang 120 in den Zylindermantel 8 des Aufnahmegrundkörpers 4 - koaxial zu Aufnahmegrundkörper 4 und Durchgangsrohr/Kühlmittelrohr 10 - eingepresst - und erstreckt sich (im Hohlraum 6 im Aufnahmegrundkörper 4) im Wesentlichen über die gesamte axiale 14 Länge zwischen Durchgangsrohrhalter 22 und Schleifscheibenauflage 36. Mittels der Schleifscheibenauflage 36 kann sie auch axial in dem Hohlraum 6 des Aufnahmegrundkörpers 4 verspannt sein.

Die Wandstärke 128 der Hülse 70 ist dünnwandig ausgebildet, so dass sich ein radialer Abstand 72 zum Außenumfang 124 des Kühlmittelrohres 10 ausbildet.

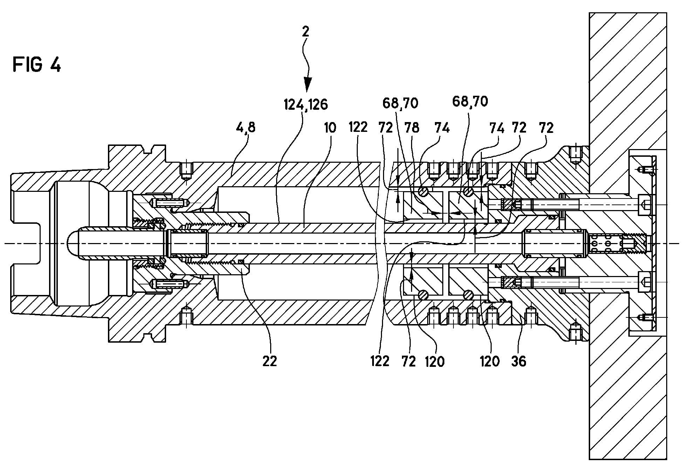

FIG 4 zeigt die Schleifscheibenaufnahme 2, wie sie durch wieder andere zusätzliche Dämpfungselemente 68 in ihren Dämpfungsverhalten verbessert wird.

Wie FIG 4 zeigt, befinden sich im Inneren der Zylindermantels 8 des Aufnahmegrundkörpers 4 zwei Dämpfungselementen 68 - in Form von Ringscheiben 70.

Diese Ringscheiben 70 sind - über an ihren Außenumfang 120 angeordnete (Gummi-)Ringe 74 in radialem Abstand 72 - in dem Zylindermantel 8 des Aufnahmegrundkörpers 4 - koaxial zu Aufnahmegrundkörper 4 und Durchgangsrohr/Kühlmittelrohr 10 - gehalten - und zwar (axial 14) am schleifscheibenauflagenseitigen Ende des Aufnahmegrundkörpers 4 - mit axialem Abstand 78 zueinander.

Ist der Innenumfangsdurchmesser 122 der Ringscheiben 70 größer als der Außenumfangsdurchmesser 126 des Durchgangsrohrs 10, so lassen die Ringscheiben 70 auch einen radialen Abstand 72 zum Außenumfang 124 des Kühlmittelrohres 10.

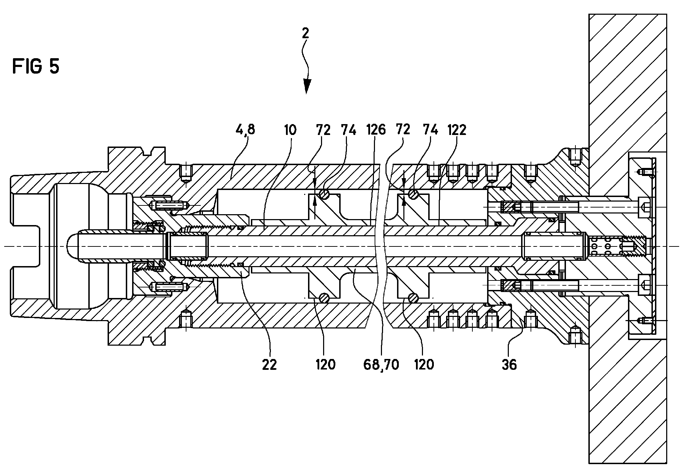

FIG 5 zeigt die Schleifscheibenaufnahme 2, wie sie - in diesem Fall - durch ein zusätzliches Dämpfungselement 68 in ihren Dämpfungsverhalten verbessert wird.

Wie FIG 5 zeigt, befindet sich im Inneren des Zylindermantels 8 des Aufnahmegrundkörpers 4 ein Dämpfungselement 68 - in Form eines hülsenförmigen Körpers 70, kurz auch wieder nur als Hülse 70 bezeichnet.

Diese Hülse 70 ist - über an zwei axial beabstandeten Stellen an ihrem Außenumfang 120 angeordneten (Gummi-)Ringen 74 in radialem Abstand 72 - in dem Zylindermantel 8 des Aufnahmegrundkörpers 4 - koaxial zu Aufnahmegrundkörper 4 und Durchgangsrohr/Kühlmittelrohr 10 - gehalten.

Der Innenumfangsdurchmesser 122 der Hülse 70 ist geringfügig größer als der Außenumfangsdurchmesser 126 des Durchgangsrohrs 10, wodurch die Hülse 70 auf das Kühlmittelrohr 10 aufgeschoben werden kann.

Axial erstreckt sich die Hülse 70 auf der gesamten axialen Länge zwischen Durchgangsrohrhalter 22 und Schleifscheibenauflage 36 - kann aber beiderends jeweils Spiel zu Durchgangsrohrhalter 22 und Schleifscheibenauflage 36 haben.

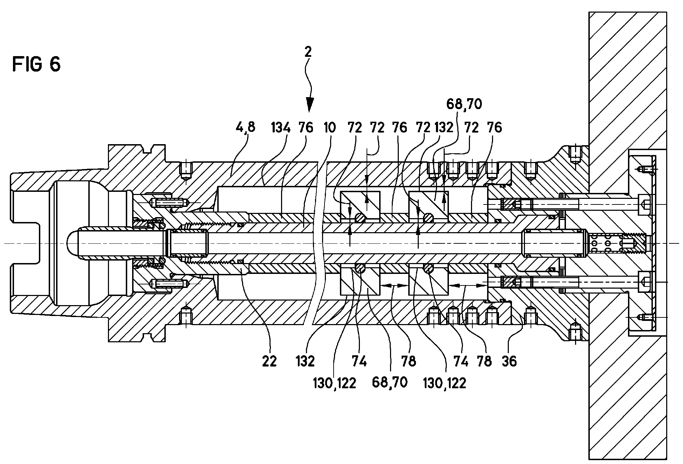

FIG 6 zeigt die Schleifscheibenaufnahme 2, wie sie durch - in diesem Fall zwei - zusätzliche Dämpfungselemente 68 in ihren Dämpfungsverhalten verbessert wird.

Wie FIG 6 zeigt, befinden sich im Inneren der Zylindermantels 8 des Aufnahmegrundkörpers 4 - in diesem Fall - zwei Dämpfungselemente 68 - in Form von Ringscheiben 70.

Diese Ringscheiben 70 sind - über an ihren Innenumfang 130 angeordneten (Gummi-)Ringen 74 in radialem Abstand 72 - auf dem Kühlmittelrohr 10 - koaxial zu Aufnahmegrundkörper 4 und Durchgangsrohr/Kühlmittelrohr 10 - gehalten.

Ist der Außenumfangsdurchmesser 132 der Ringscheiben 70 kleiner als der Innenumfangsdurchmesser 134 des Aufnahmegrundkörpers 4 bzw. dessen Zylindermantel 8, so lassen die Ringscheiben 70 auch einen radialen Abstand 72 zum Aufnahmegrundkörper 4.

Axial in Position (mit Axialabstand 78) gehalten werden die zwei Ringscheiben 70 mittels zwischen und benachbart diesen angeordneten, auf dem Kühlmittelrohr zwischen dem Durchgangsrohrhalter 22 und der Schleifscheibenauflage 36 aufgeschobenen bzw. angeordneten Hülsen 76.

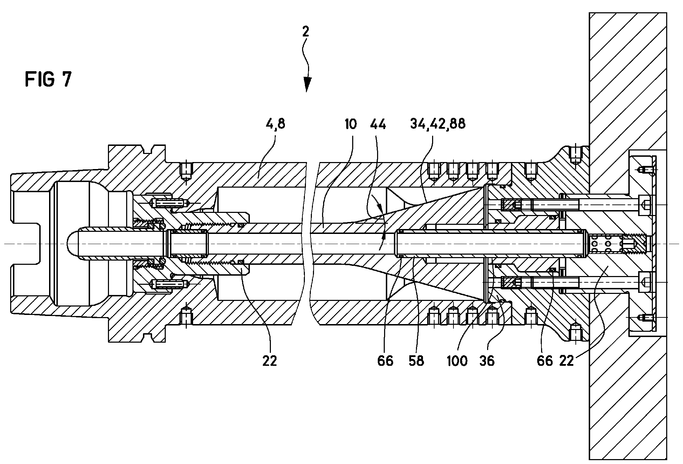

FIG 7 zeigt die Schleifscheibenaufnahme 2 - mit einem modifizierten Verspannungskontakt bzw. -flächen zwischen - in diesem Fall - Kühlmittelrohr 10 und Aufnahmegrundkörper 4 (unmittelbare direkte Verspannung des Durchgangsrohrs 10 mit dem Aufnahmegrundkörper 4).

D.h., der Kraftfluss der Verspannung des Kühlmittelrohres 10 erfolgt nicht über die Schleifscheibenauflage 36 in den Aufnahmegrundkörper 4, sondern unmittelbar und direkt von Kühlmittelrohr 10 auf Aufnahmegrundkörper 4.

Wie FIG 7 zeigt, sieht das Kühlmittelrohr 10 dazu an seinem deckelseitigen Ende eine (einen flachen Außenkonus 42 bildende) konische - mit einen vorgebbaren Konuswinkel 44, hier beispielsweise ca. 15°, - Spannschulter 34 vor, welche gegen eine komplementäre Spannschulter 88 - in diesem Fall - an dem Aufnahmegrundkörper 4 verspannt ist.

Die Hülse 58 - zwischen Kühlmittelrohr 10 einerseits und Spannflansch 22 andererseits - ist so durch die - in diesem Fall schulterfreie/konusfreie, zylindrische - Bohrung 100 in der Schleifscheibenauflage 36 durchgeführt und dort mittels einer ersten Dichtung 66 abgedichtet. Mittels einer zweiten Dichtung 66 ist die Hülse 58 auch gegen das Kühlmittelrohr 10 abgedichtet.

FIG 8 verdeutlicht, dass die - wie im Vorigen beschriebene einstückig mit dem Aufnahmegrundkörper 4 ausgebildete Schnittstelle 82 - auch durch ein separates Bauteil 82 ausgeführt sein kann.

Diese separate Schnittstelle 82 ist dabei, wie FIG 8 zeigt, durch Stifte 136 mit dem Aufnahmegrundkörper 4 - drehfest - verbunden.

Ist so die Schnittstelle 82 als separates Bauteil vorgesehen, wäre es auch möglich (nicht gezeigt), den Durchgangsrohrhalter 22 - anstelle eines separaten Bauteils - einstückig an der Schnittstelle vorzusehen, gewährleistet die durch die separate Schnittstelle 82 teilbare Ausführung von Schnittstelle 82 und Aufnahmegrundkörper 4 ausreichende Zugänglichkeit, welche für die Herstellung und Montage der Schleifscheibenaufnahme 2 notwendig ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung gemäß der folgenden Ansprüche zu verlassen.

### Bezugszeichenliste:

- 2: Schleifscheibenaufnahme
- 4: Aufnahmegrundkörper
- 6: Hohlraum
- 8: Zylindermantel
- 10: Durchgangsrohr, Kühlmitelrohr

- 12: Mittel-/Symmetrie-/Drehachse
- 14: axial, Axialrichtung
- 16: radial, Radialrichtung
- 18: (Außen-)Gewinde
- 20: Verschraubung

- 22: Durchgangsrohrhalter
- 24: Stift, verstiftet
- 26: Kühlmittelzuführrohr
- 28: verschraubt, Verschraubung
- 30: Hülse

- 32: Abdichtung
- 34: Spannschulter
- 36: Schleifscheibenauflage
- 38: Verschlussschraube
- 40: Einfüllbohrung

- 42: (Außen-)Konus
- 44: Konuswinkel
- 46: Spannflansch
- 48: Schleifscheibe
- 50: radiale Kühlmittelbohrung

- 52: Verschlussschraube
- 54: (sich axial erstreckende) Kühlmittbohrung
- 56: Schnittstelle (Durchgangsrohr/Spannflansch)
- 58: Hülse
- 60: Bohrung (für Wuchtschraube)

- 62: Wuchtschraube (nicht gezeigt)
- 64: Außenumfangsfläche
- 66: abgedichtet, Abdichtung (Kühlmittelrohr), Dichtring
- 68: Dämpfungskörper, Dämpfungs-/Schwingungsmasse
- 70: Ringscheibe, Hülse

- 72: (Radial-)Abstand, (radial) beabstandet
- 74: Ring
- 76: Hülse
- 78: (Axial-)Abstand, (axial) beabstandet
- 80: Dämpfstoff, Elastomer, (Alu-)Schaum

- 82: Schnittstelle, HSK, Steilkegel
- 84: Schleifspindel (nicht gezeigt)
- 86: Innengewinde (für 18/20)
- 88: (komplementäre) Spannschulter
- 90: Deckel

- 92: Verschraubung (für Deckel)
- 94: Langschraube
- 96: (Durchgangs-)Bohrung
- 98: Gewinde
- 100: Durchgangsbohrung (in der Schleifscheibenauflage)
- 102: Flansch
- 104: deckelseitigen Stirnseite des Aufnahmegrundkörpers
- 106: Schulter (am Durchgangrohrhalter)
- 108: (Gegen-)Schulter (für 106)
- 110: Anschlag

- 112: Hülse
- 114: Außenseite
- 116: Durchgangsbohrung
- 120: Außenumfang

- 122: Innenumfangsdurchmesser (von 70)
- 124: Außenumfang
- 126: Außenumfangsdurchmesser (von 22 oder 10)
- 128: Wandstärke
- 130: Innenumfang

- 132: Außenumfangsdurchmesser (von 70)
- 134: Innenumfangsdurchmesser (von 4/8)
- 136: Stift
- 138: Schraube
- 140: Dichtring

## Patentansprüche

1. Schleifscheibenaufnahme mit einem rotationssymmetrischen, hohlzylinderförmigen Aufnahmegrundkörper (4) und einem im Hohlraum des Aufnahmegrundkörpers beabstandet vom Zylindermantel (8) des Aufnahmegrundkörpers angeordnetes Durchgangsrohr (10), **dadurch gekennzeichnet, dass** das im Hohlraum des Aufnahmegrundkörpers angeordnete Durchgangsrohr gegen den Aufnahmegrundkörper verspannt ist.

2. Schleifscheibenaufnahme nach dem voranstehenden Anspruch, **dadurch gekennzeichnet, dass**
das, insbesondere rotationssymmetrische, Durchgangsrohr koaxial zum Aufnahmekörper in diesem angeordnet ist.

3. Schleifscheibenaufnahme nach einem der voranstehenden Ansprüche,
**dadurch gekennzeichnet, dass**
einerends des Durchgangsrohrs ein Gewinde (18), insbesondere ein Außengewinde für eine Verschraubung mit einem, insbesondere im Aufnahmegrundkörper angeordneten, Durchgangsrohrhalter (22), am Durchgangsrohr angeordnet ist.

4. Schleifscheibenaufnahme nach einem der voranstehenden Ansprüche,
**gekennzeichnet, durch**
einen an dem Aufnahmegrundkörper angeordneten Durchgangsrohrhalter, insbesondere einen mit dem Aufnahmegrundkörper drehfest verbundenen, insbesondere verstifteten Durchgangsrohrhalter.

5. Schleifscheibenaufnahme nach Anspruch 4, **dadurch gekennzeichnet, dass**
mit dem Durchgangsrohrhalter ein Kühlmittelzuführrohr (26) verbunden, insbesondere verschraubt, ist und/oder dass zwischen dem Durchgangsrohr und dem Durchgangsrohrhalter eine Hülse (30) angeordnet, insbesondere abgedichtet angeordnet, ist.

6. Schleifscheibenaufnahme nach einem der voranstehenden Ansprüche,
**dadurch gekennzeichnet, dass**
andererends des Durchgangsrohrs eine Spannschulter (34) zur Verspannung mit dem Aufnahmegrundkörper oder mit einer mit dem Aufnahmegrundkörper verbundenen Schleifscheibenauflage angeordnet ist.

7. Schleifscheibenaufnahme nach einem der voranstehenden Ansprüche,
**gekennzeichnet, durch**
eine Schleifscheibenauflage (36), gegen welche das Durchgangsrohr verspannt ist und welche sich an dem Aufnahmegrundkörper abstützt, insbesondere mit dem Aufnahmegrundkörper verschraubt (138) ist.

8. Schleifscheibenaufnahme nach Anspruch 7, **dadurch gekennzeichnet, dass**
die Schleifscheibenauflage mindestens eine in den Hohlraum mündende, insbesondere mittels einer Verschlussschraube verschließbare, Einfüllbohrung (40) aufweist.

9. Schleifscheibenaufnahme nach einem der Ansprüche 6-8, **dadurch gekennzeichnet, dass**
die Spannschulter einen Außenkonus aufweist.

10. Schleifscheibenaufnahme nach einem der voranstehenden Ansprüche,
**gekennzeichnet, durch**
einen mit der Schleifscheibenauflage verschraubbaren Spannflansch für eine Schleifscheibe.

11. Schleifscheibenaufnahme nach Anspruch 10, **gekennzeichnet, durch**
radiale Kühlmitteldurchgangsbohrungen (96) in dem Spannflansch und/oder durch eine sich axial durch den Spannflansch hindurch erstreckende, insbesondere mittels einer Verschlussschraube verschließbare, Kühlmittelbohrung (56).

12. Schleifscheibenaufnahme nach einem der voranstehenden Ansprüche,
**gekennzeichnet, durch**
eine an einer Schnittstelle zwischen dem Durchgangsrohr und dem Spannflansch zwischen dem Durchgangsrohr und dem Spannflansch angeordnete, insbesondere abgedichtete, Hülse (70).

13. Schleifscheibenaufnahme nach einem der voranstehenden Ansprüche,
**gekennzeichnet, durch**
Bohrungen, insbesondere Gewindebohrungen, für Wuchtschrauben an einer Außenumfangsfläche des Aufnahmegrundkörpers und/oder der Schleifscheibenauflage.

14. Schleifscheibenaufnahme nach einem der voranstehenden Ansprüche,
**dadurch gekennzeichnet, dass**
das Durchgangsrohr ein Kühlmittelrohr, insbesondere ein gegen den Hohlraum abgedichtetes Kühlmittelrohr, ist.

15. Schleifscheibenaufnahme nach einem der voranstehenden Ansprüche,
**gekennzeichnet, durch**
mindestens einen im Hohlraum angeordneten Dämpfungskörper (68).

16. Schleifscheibenaufnahme nach Anspruch 15, **dadurch gekennzeichnet, dass**
der mindestens eine Dämpfungskörper eine Ringscheibe oder eine Hülse, insbesondere eine in den Hohlraum eingepresste und/oder verspannte Ringscheibe oder Hülse, insbesondere eine Ringscheibe oder Hülse aus Kunststoff, Metall oder Gummi, ist.

17. Schleifscheibenaufnahme nach einem der Ansprüche 15 oder 16, **dadurch gekennzeichnet, dass**
der mindestens eine Dämpfungskörper ein von dem Zylindermantel und/oder vom Durchgangsrohr beabstandet gehaltener, insbesondere mittels eines Ringes, im Speziellen mittels eines Gummi- oder Kunststoffringes beabstandet gehaltener, Dämpfungskörper, insbesondere aus einem (Schwer-)Metall oder einem Kunststoff, ist.

18. Schleifscheibenaufnahme nach einem der voranstehenden Ansprüche,
**gekennzeichnet, durch**
mehrere, insbesondere ein Vielzahl, im Hohlraum angeordnete Dämpfungskörper.

19. Schleifscheibenaufnahme nach Anspruch 18, **dadurch gekennzeichnet, dass**
die mehreren bzw. die vielen Dämpfungskörper mittels Hülsen axial beabstandet gehaltene Ringscheiben (70) sind, welche insbesondere mittels Ringe, im Speziellen mittels Gummi- oder Kunststoffringe, vom Zylindermantel und/oder vom Durchgangsrohr beabstandet gehalten werden.

20. Schleifscheibenaufnahme nach einem der voranstehenden Ansprüche,
**dadurch gekennzeichnet, dass**
in dem Hohlraum ein Dämpfstoff eingebracht ist, insbesondere ein Elastomer oder ein (Alu-)Schaum.

21. Schleifscheibenaufnahme nach einem der voranstehenden Ansprüche,
**gekennzeichnet, durch**
eine Schnittstelle für eine Arbeitsspindel, insbesondere einen HSK oder Steilkegel, welche einerends des Aufnahmegrundkörpers mit dem Aufnahmegrundkörper einstückig oder als separates Bauteil verbunden abgeordnet ist.

## Claims

1. Grinding wheel mount having a rotationally symmetrical, hollow cylindrical mount main body (4) and a through-pipe (10) which is arranged in the cavity of the mount main body at a distance from the cylinder shell (8) of the mount main body, **characterized in that** the through-pipe which is arranged in the cavity of the mount main body is clamped against the mount main body.

2. Grinding wheel mount according to the preceding claim,
**characterized in that**
the in particular rotationally symmetrical through-pipe is arranged coaxially to the mount body within said body.

3. Grinding wheel mount according to either of the preceding claims,
**characterized in that**
at one end of the through-pipe, a thread (18), in particular an external thread for screwing to a through-pipe holder (22), in particular arranged in the mount main body, is arranged on the through-pipe.

4. Grinding wheel mount according to any of the preceding claims,
**characterized by**
a through-pipe holder which is arranged on the mount main body, in particular a through-pipe holder which is connected, in particular pinned, to the mount main body for conjoint rotation.

5. Grinding wheel mount according to claim 4,
**characterized in that**
a coolant supply pipe (26) is connected, in particular screwed, to the through-pipe holder and/or **in that** a sleeve (30) is arranged, in particular sealingly arranged, between the through-pipe and the through-pipe holder.

6. Grinding wheel mount according to any of the preceding claims,
**characterized in that**
at the other end of the through-pipe, a clamping shoulder (34) is arranged for clamping to the mount main body or to a grinding wheel support which is connected to the mount main body.

7. Grinding wheel mount according to any of the preceding claims,
**characterized by**
a grinding wheel support (36) against which the through-pipe is clamped and which is supported on the mount main body, in particular screwed to the mount main body (138).

8. Grinding wheel mount according to claim 7,
**characterized in that**
the grinding wheel support has at least one filling hole (40) which opens into the cavity and which in particular can be closed by means of a screw plug.

9. Grinding wheel mount according to any of claims 6-8,
**characterized in that**
the clamping shoulder has an external cone.

10. Grinding wheel mount according to any of the preceding claims,
**characterized by**
a clamping flange which is for a grinding wheel and can be screwed to the grinding wheel support.

11. Grinding wheel mount according to claim 10,
**characterized by**
radial coolant through-holes (96) in the clamping flange
and/or by a coolant hole (56) which extends axially through the clamping flange and which in particular can be closed by means of a screw plug.

12. Grinding wheel mount according to any of the preceding claims,
**characterized by**
a sleeve (70) which is arranged, in particular sealed, at an interface between the through-pipe and the clamping flange between the through-pipe and the clamping flange.

13. Grinding wheel mount according to any of the preceding claims,
**characterized by**
holes, in particular threaded holes, for balancing screws on an outer circumferential surface of the mount main body and/or the grinding wheel support.

14. Grinding wheel mount according to any of the preceding claims,
**characterized in that**
the through-pipe is a coolant pipe, in particular a coolant pipe sealed against the cavity.

15. Grinding wheel mount according to any of the preceding claims,
**characterized by**
at least one damping body which is arranged in the cavity (68).

16. Grinding wheel mount according to claim 15,
**characterized in that**
the at least one damping body is a ring wheel or a sleeve, in particular a ring wheel or sleeve pressed and/or clamped into the cavity, in particular a ring wheel or sleeve made of plastics material, metal or rubber.

17. Grinding wheel mount according to either of claims 15 or 16,
**characterized in that**
the at least one damping body is a damping body which is held at a distance from the cylinder shell and/or from the through-pipe, in particular by means of a ring, specifically by means of a rubber or plastics ring, and is in particular made of a (heavy) metal or a plastics material.

18. Grinding wheel mount according to any of the preceding claims,
**characterized by**
a plurality, in particular a large number, of damping bodies arranged in the cavity.

19. Grinding wheel mount according to claim 18,
**characterized in that**
the plurality of or the many damping bodies are ring wheels (70) which are held axially at a distance by means of sleeves and are held at a distance from the cylinder shell and/or from the through-pipe in particular by means of rings, specifically by means of rubber or plastics rings.

20. Grinding wheel mount according to any of the preceding claims,
**characterized in that**
a damping material, in particular an elastomer or an (aluminum) foam, is introduced into the cavity.

21. Grinding wheel mount according to any of the preceding claims,
**characterized by**
an interface for a working spindle, in particular a hollow shank taper or steep taper, which is delegated as connected to the mount main body integrally or as a separate component at one end of the mount main body.

## Revendications

1. Porte-meule comportant un corps de base de porte-meule (4) de forme cylindrique creuse et à symétrie de révolution et un tube traversant (10) disposé dans la cavité du corps de base de porte-meule en étant espacé de l'enveloppe cylindrique (8) du corps de base de porte-meule, **caractérisé en ce que** le tube traversant disposé dans la cavité du corps de base de porte-meule est serré contre le corps de base de porte-meule.

2. Porte-meule selon la revendication précédente,
**caractérisé en ce que**
le tube traversant, en particulier à symétrie de révolution, est disposé coaxialement par rapport au corps de porte-meule à l'intérieur de celui-ci.

3. Porte-meule selon l'une des revendications précédentes,
**caractérisé en ce que**
à une extrémité du tube traversant est disposé, sur le tube traversant, un filetage (18), en particulier un filetage extérieur pour un raccord fileté avec un support de tube traversant (22) disposé en particulier dans le corps de base de porte-meule.

4. Porte-meule selon l'une des revendications précédentes,
**caractérisé par**
un support de tube traversant disposé sur le corps de base de porte-meule, en particulier un support de tube traversant solidaire en rotation, en particulier goupillé, avec le corps de base de porte-meule.

5. Porte-meule selon la revendication 4,
**caractérisé en ce que**
un tuyau d'alimentation en fluide de refroidissement (26) est relié, en particulier vissé, au support de tube traversan**t, et/ou qu'**un manchon (30) est disposé, en particulier disposé de manière étanche, entre le tube traversant et le support de tube traversant.

6. Porte-meule selon l'une des revendications précédentes,
**caractérisé en ce que**
à l'autre extrémité du tube traversant est disposé un épaulement de serrage (34) pour le serrage avec le corps de base de porte-meule ou avec un moyen de soutien de meule relié au corps de base de porte-meule.

7. Porte-meule selon l'une des revendications précédentes,
**caractérisé par**
un moyen de soutien de meule (36) contre lequel le tube traversant est serré et qui s'appuie sur le corps de base de porte-meule, en particulier est vissé (138) au corps de base de porte-meule.

8. Porte-meule selon la revendication 7,
**caractérisé en ce que**
le moyen de soutien de meule présente au moins un trou de remplissage (40) débouchant dans la cavité et pouvant en particulier être obturé à l'aide d'une vis d'obturation.

9. Porte-meule selon l'une des revendications 6 à 8,
**caractérisé en ce que**
l'épaulement de serrage présente un cône extérieur.

10. Porte-meule selon l'une des revendications précédentes,
**caractérisé par**
une bride de serrage pour une meule pouvant être vissée au moyen de soutien de meule.

11. Porte-meule selon la revendication 10,
**caractérisé par**
des trous traversants pour fluide de refroidissement (96) radiaux dans la bride de serrage
**et/ou par** un trou pour fluide de refroidissement (56) s'étendant axialement à travers la bride de serrage et pouvant en particulier être obturé au moyen d'une vis d'obturation.

12. Porte-meule selon l'une des revendications précédentes,
**caractérisé par**
un manchon (70) disposé, en particulier étanchéifié, au niveau d'un point d'intersection entre le tube traversant et la bride de serrage entre le tube traversant et la bride de serrage.

13. Porte-meule selon l'une des revendications précédentes,
**caractérisé par**
des trous, en particulier des trous filetés, pour des vis d'équilibrage sur une surface périphérique extérieure du corps de base de porte-meule et/ou du moyen de soutien de meule.

14. Porte-meule selon l'une des revendications précédentes,
**caractérisé en ce que**
le tube traversant est un tube pour fluide de refroidissement, en particulier un tube pour fluide de refroidissement étanche par rapport à la cavité.

15. Porte-meule selon l'une des revendications précédentes,
**caractérisé par**
au moins un corps d'amortissement (68) disposé dans la cavité.

16. Porte-meule selon la revendication 15,
**caractérisé en ce que**
l'au moins un corps d'amortissement est un disque annulaire ou un manchon, en particulier un disque annulaire ou un manchon pressé et/ou serré dans la cavité, en particulier un disque annulaire ou un manchon en plastique, en métal ou en caoutchouc.

17. Porte-meule selon l'une des revendications 15 ou 16,
**caractérisé en ce que**
l'au moins un corps d'amortissement est un corps d'amortissement, en particulier en métal (lourd) ou en matière plastique, maintenu à distance de l'enveloppe cylindrique et/ou du tube traversant, en particulier maintenu à distance au moyen d'un anneau, tout particulièrement au moyen d'un anneau en caoutchouc ou en matière plastique.

18. Porte-meule selon l'une des revendications précédentes,
**caractérisé par**
multiples corps d'amortissement, en particulier une pluralité, disposés dans la cavité.

19. Porte-meule selon la revendication 18,
**caractérisé en ce que**
les multiples corps d'amortissement ou la pluralité de ceux-ci sont des disques annulaires (70) maintenus à distance axialement au moyen de manchons, lesquels sont maintenus à distance de l'enveloppe cylindrique et/ou du tube traversant en particulier au moyen d'anneaux, tout particulièrement au moyen d'anneaux en caoutchouc ou en matière plastique.

20. Porte-meule selon l'une des revendications précédentes,
**caractérisé en ce que**
un matériau amortisseur est introduit dans la cavité, en particulier un élastomère ou une mousse (d'aluminium).

21. Porte-meule selon l'une des revendications précédentes,
**caractérisé par**
une interface pour une broche de travail, en particulier une interface HSK ou un cône à pente rapide, qui est disposé en étant relié, à une extrémité du corps de base de porte-meule, d'un seul tenant avec le corps de base de porte-meule ou en tant que composant séparé.
